(19) Europäisches Patentamt / European Patent Office / Office européen des brevets

(11) **EP 4 589 454 A1**

(12) **EUROPEAN PATENT APPLICATION**

(43) Date of publication:
23.07.2025 Bulletin 2025/30

(21) Application number: 25152274.4

(22) Date of filing: 16.01.2025

(51) International Patent Classification (IPC):
*G06F 18/2132* (2023.01)     *G06T 7/00* (2017.01)
*G06V 10/44* (2022.01)     *G06V 10/774* (2022.01)
*G06V 10/82* (2022.01)     *G06V 20/69* (2022.01)

(52) Cooperative Patent Classification (CPC):
**G06V 10/454; G06F 18/21326; G06T 7/0004;
G06V 10/7747; G06V 10/82; G06V 20/69;**
G06T 2207/20081; G06T 2207/20084;
G06T 2207/30164

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 17.01.2024 CN 202410072031

(71) Applicant: **Volvo Car Corporation**
**405 31 Göteborg (SE)**

(72) Inventors:
• **QI, Jiajun**
**Shanghai (CN)**
• **XU, Yinbing**
**Shanghai (CN)**

(74) Representative: **Maiwald GmbH**
**Engineering**
**Elisenhof**
**Elisenstrasse 3**
**80335 München (DE)**

(54) **NEURAL NETWORK MODEL, METHOD AND APPARATUS FOR EVALUATING A QUALITY OF A BRAKE DISC**

(57) A method for establishing a deep learning based convolutional neural network model, in which the convolutional neural network model is used to evaluating the quality of a vehicle's brake disc, and includes a feature extraction network, an anchor box detection network and a classification and regression network; and the classification and regression network further includes a first fully connected layer, a second fully connected layer, and a regularization layer between the first fully connected layer and the second fully connected layer.

FIG. 1

EP 4 589 454 A1

## Description

CROSS-REFERENCE TO RELATED APPLICATION

The present disclosure claims the benefit of priority of co-pending Chinese Patent Application No. 202410072031.1, filed on January 17, 2024, and entitled "NEURAL NETWORK MODEL, METHOD AND APPARATUS FOR EVALUATING A QUALITY OF A BRAKE DISC".

TECHNICAL FIELD

In general, the present disclosure relates to quality evaluation of a vehicle's brake disc.

BACKGROUND

The brake disc (or referred to as "brake pad" or "brake flange") of a vehicle is an important component in a disc-type brake apparatus, which is usually installed on vehicle's axles and moves with corresponding wheels. As the vehicle performs a braking operation, a friction will occur between the pads of brake calipers located on both sides of a brake disc and the brake disc, resulting in a braking force to slow down the vehicle, thereby realizing a corresponding braking operation. Therefore, the quality of the vehicle's brake disc will determine the braking/decelerating performance for the vehicle, and in turn affect the driving experience and safety for the vehicle. In order to guarantee delivery of a high-quality vehicle to the user, it is necessary to accurately estimate the quality of a vehicle's brake disc.

Therefore, there is a need in the art for a more efficient and accurate related technology for evaluating the quality of a vehicle's brake disc.

SUMMARY

In view of this, the present disclosure proposes a method for establishing a deep learning based convolutional neural network model, a method and apparatus for evaluating the quality of a vehicle's brake disc using the convolutional neural network model, as well as a computer-readable storage medium and a computer program product for performing the method.

According to an aspect of the present disclosure, there is provided a computer-implemented method for establishing a deep learning based convolutional neural network model, in which the convolutional neural network model is used to evaluate the quality of a vehicle's brake disc, and includes a feature extraction network, an anchor box detection network and a classification and regression network; and in which the classification and regression network further includes a first fully connected layer, a second fully connected layer, and a regularization layer between the first fully connected layer and the second fully connected layer; the method including: obtaining a sample image related to the brake disc; extracting, by the feature extraction network, features of the sample image; detecting, by the anchor box detection network, an anchor box corresponding to a target feature of the brake disc in the sample image based on the extracted features; calculating, by the classification and regression network, a score for the detected anchor box, and adjusting one or more parameters of the convolutional neural network model based on the score; and iterating the above steps until the score reaches a predetermined threshold.

According to an embodiment of the present disclosure, the method further includes performing a first data processing on a first number of the sample images to generate a second number of sample images, the second number being greater than the first number, in which the first data processing includes: image rotation to rotate the sample image; color disturbance enhancement to adjust corresponding color gamut of the sample image; or a combination thereof.

According to an embodiment of the present disclosure, the method further includes performing, after the first data processing, a second data processing on the sample image, in which the second data processing includes: fusing a plurality of pixels belonging to the same neighborhood in the sample image into one pixel, and performing the fusing on all pixels in the sample image to generate a scaled sample image with a smaller size than that of the original sample image.

According to the embodiment of the present disclosure, the convolutional neural network model further includes an attention weight module that follows the feature extraction network and precedes the anchor box detection network, and the attention weight module applies an attention weight to the features extracted by the feature extraction network based on an attention mechanism.

According to an embodiment of the present disclosure, a VGG network or a Resnet network is used as the feature extraction network, and the anchor box detection network uses a faster R-CNN to detect the anchor boxes.

According to another aspect of the present disclosure, there is provided a computer-implemented method for evaluating the quality of a vehicle's brake disc, the method including: inputting a sample image into a convolutional neural network model established by the method according to the embodiments of the present disclosure to automatically detect a target feature of the brake disc; and evaluating the quality of the brake disc based on the target feature.

According to an embodiment of the present disclosure, the convolutional neural network model is used to evaluate the quality of a brake disc manufactured based on the Programmable Ion Permeation (PIP) technology, the sample image is an image related to at least a part of a surface of the brake disc, and the target feature of the brake disc is thickness of the infiltrated layer of the surface; or the convolutional neural network model is used for evaluating the quality of a brake disc containing different components, the sample image is an image related to at least a part of a surface of the brake disc, and the target feature of the brake disc is an area with a specified range of grayscale within the surface, and the area with a specified range of grayscale corresponds to a respective component of the brake disc; and the convolutional neural network model evaluates the quality of the brake disc based on the target feature.

According to yet another aspect of the present disclosure, there is provided a computer program product including computer instructions which, when executed by a processor, cause the processor to perform the method for establishing a deep learning based convolutional neural network model and the method for evaluating the quality of a vehicle's brake disc according to the embodiments of the present disclosure.

According to yet another aspect of the present disclosure, there is provided an apparatus for evaluating the quality of a vehicle's brake disc, including: a processor; and a memory having stored therein computer instructions which, when executed by the processor, cause the processor to perform the method for evaluating the quality of a vehicle's brake disc according to the embodiments of the present disclosure.

According to yet another aspect of the present disclosure, there is provided a computer-readable storage medium having stored thereon computer instructions which, when executed by a processor, cause the processor to perform the method for evaluating the quality of a vehicle's brake disc according to the embodiments of the present disclosure.

Based on the above, according to the above aspects of the present disclosure, a deep learning based technology for quality evaluation of a vehicle's brake disc can be realized, enabling automatic evaluation of quality of brake disc based on an image of a brake disc. The present disclosure not only realizes an efficient and accurate quality evaluation method, but also simplifies, with respect to such a specific application scenario for quality of a brake disc, the method for quality evaluation of a brake disc using corresponding data processing and model optimization technologies, so that the training of neural network model can be done under a condition of limited number of samples, while reducing processing time, and have significant application value in industry.

BRIEF DESCRIPTION OF DRAWINGS

The advantages of various aspects of the present disclosure will become clearer and easier to understand from the following detailed description of the embodiments of the present disclosure in conjunction with the accompanying drawings, in which:

FIG. 1 shows an example of a microscopic image of a sample cut out from a brake disc's surface;
FIG. 2 shows an architecture of a convolutional neural network model according to an embodiment of the present disclosure;
FIG. 3 shows a flowchart of a method for establishing a convolutional neural network model according to an embodiment of the present disclosure;
FIG. 4 shows an example of marking thickness of an infiltrated layer in a microscopic image of an FNC surface; and
FIG. 5 is a block diagram showing an apparatus for evaluating the quality of a vehicle's brake disc according to an embodiment of the present disclosure.

DETAILED DESCRIPTION

In order to better set forth the technical solution of the present disclosure, a detailed illustration will be made to the present disclosure in conjunction with the accompanying drawings and the detailed description. It should be understood that based on the embodiments described in the present disclosure, all the other resulting implementations by those skilled in the art without paying creative labor should fall within the protection scope of the present disclosure, and the embodiments described herein are only part of the embodiments of the present disclosure, not all the embodiments of the present disclosure. Such embodiments are merely illustrative and exemplary, and thus should not be interpreted as limiting the scope of the present disclosure.

First of all, an illustration will be made to the overall technical concept of the present disclosure and the main technical terminologies involved.

As described above, a braking operation of a vehicle is realized by means of a friction between the brake disc of the vehicle and the pads of the brake calipers. Therefore, the brake disc should possess excellent characteristics such as corrosion resistance, wear resistance and fatigue resistance to guarantee the friction performance for the brake disc. Such characteristics can usually be reflected by the surficial appearance of the brake disc, and that is why the quality of the brake disc can be evaluated by observing the features such as texture and pattern of the surface of the brake disc.

Traditionally, quality evaluation of a vehicle's brake disc can be done manually. For example, firstly, a part (e.g., a rectangle with a side length of about 15mm) is cut out from a surface of a brake disc as a test sample, and then an operator is required to observe, by means of visual inspection (e.g., through a microscope), whether there is any defect in the sample, and evaluate whether the quality of the brake disc is qualified according thereto.

However, such manual based quality evaluation is not only extremely inefficient, but also requires the operator to possess corresponding expertise and experience, and moreover, the reliability of the resulting evaluation results by visual inspection is difficult to be guaranteed. Additionally, compared with the images of surfaces of other spare parts, the grayscale of the images involving the surfaces of the brake discs is very uniform, meaning that the color difference among the pixels in the images is very low, so that to the features in need of attention in the images are still not obvious even after the images have been performed grayscale processing on. Therefore, it is often difficult to accurately identify such features based on a manual method or general artificial intelligence technology. Moreover, such situation is especially serious for a brake disc with an ferrite nitrocarburizing (FNC) surface.

Ferrite nitrocarburizing, which is a type of surface treatment technology, makes characteristics such as corrosion resistance and wear resistance of surfaces of spare parts significantly improved by placing the spare parts in a nitrogen-enriched environment for high-temperature heat treatment, and jointly infiltrating nitrogen and carbon into ferrite spare parts. In view of this, employing FNC technology to perform a surface treatment on the surface of a vehicle's brake disc can improve the performance and service life for the brake disc. Herein, a brake disc on which a surface treatment is performed using FNC technology is referred to as an "FNC brake disc," the surface of which can be referred to as an "FNC surface" accordingly. Additionally, for purpose of illustration rather than limitation, the technical solution of the present disclosure will be set forth by mainly taking the FNC brake disc as an example. It should be understood that the technology of the present disclosure can also be applied to the quality evaluation of the brake discs with surfaces of other materials and coatings.

For a brake disc manufactured based on the Programmable Ion Permeation (PIP) technology (e.g., a FNC brake disc), in one embodiment of the present disclosure, the thickness of the infiltrated layer can be used as a standard to measure the quality of the FNC surface, so as to estimate whether the amount of infiltration for the FNC brake is sufficient. In other embodiments, for example, the compliance of the metallographic structure of the brake disc or the compliance of the coating thickness of the brake disc's surface can also be regarded as one or more metrics in the quality evaluation of the brake disc.

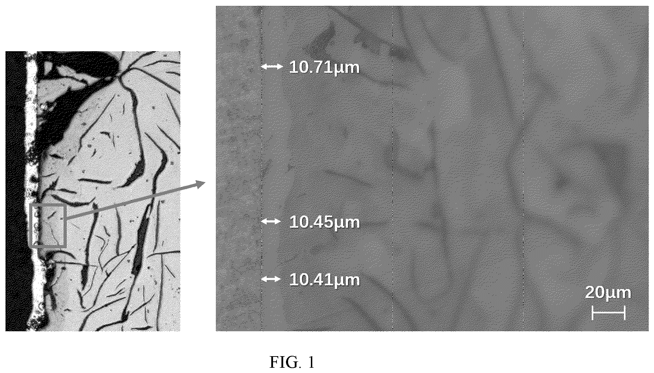

FIG. 1 shows, taking an FNC brake disc as an example, an example of a microscopic image of a sample cut out from the surface of such an FNC brake disc, in which the light-colored part on the left side represents the FNC infiltrated layer, and the dark-colored part on the right side represents the ferrite substrate without carbon and nitrogen infiltrated. As can be seen from the drawing, the background color and the foreground color of the microscopic image of the FNC surface are similar, and the overall grayscale of the image is uniform, in which the part corresponding to the edge of the infiltrated layer is very vague and irregular, making it difficult to accurately identify the position of the boundary of the infiltrated layer.

Additionally, distances between the ferrite and the FNC infiltrated layer, which are manually marked by the operator at different positions (e.g., in general, a plurality of positions in a region where the thickness of the infiltrated layer is relatively small may be selected), are also shown in FIG. 1. The length of the distance may correspond to the thickness of the FNC infiltrated layer. The longer the length is, the greater the thickness of the infiltrated layer is, and the greater the amount of FNC's infiltration (or diffusion) is; on the contrary, the shorter the length is, the smaller the thickness of the infiltration layer is, and the smaller the amount of FNC's infiltration is. By comparing marked lengths with a predefined threshold length, it can be simply evaluated whether the current sample is qualified, and in turn the quality of the FNC brake disc. For example, the above threshold length may be defined as $10\mu m$. If each of the three lengths ($10.71 \mu m$, $10.45\mu m$ and $10.41\mu m$) marked by the operator is greater than the threshold length, the quality of the current sample (or the FNC brake disc) can be evaluated as qualified. For a specific quality requirement or application scenario, the threshold length may be defined as a larger or smaller numerical value, and the number of the samples may be more than one. It can be seen that for the quality evaluation of the FNC brake disc, the precision it requires is extremely high, which is usually in the micron scale, and any slight error may lead to inaccuracy in the overall evaluation result.

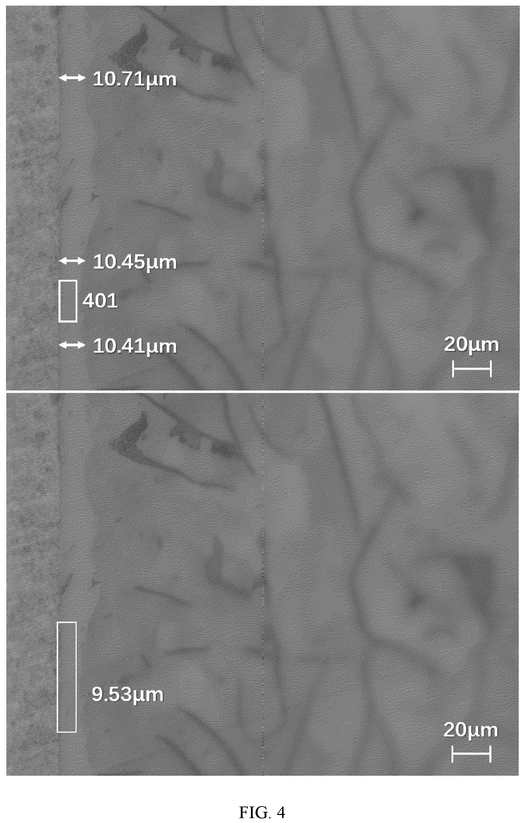

However, as described above, the time and labor costs for the manual based quality evaluation are high. It may take several minutes, even for a professional operator, to accomplish the marking of one piece of sample image, and due to the limitation of human's visual inspection, it is also difficult to guarantee the reliability of the evaluation result. As shown in the left picture in FIG. 4, the position indicated by block 401 in the sample image as shown in FIG. 1 actually includes a region where the thickness of the infiltrated layer is smaller, which indicates that there may be potential defects in the FNC brake disc, whose quality, however, is erroneously determined as qualified due to not being marked by the operator, and thus a risk exists.

In view of this, the present disclosure proposes a method for establishing a deep learning based convolutional neural network model, which is used to evaluate the quality of a vehicle's brake disc, so as to at least solve the above problems present in the existing methods.

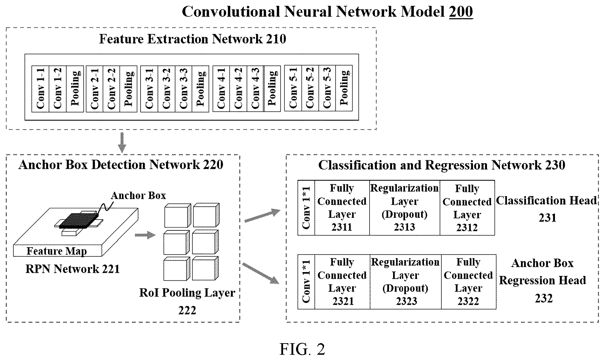

FIG. 2 shows an example architecture of a deep learning based convolutional neural network model 200 according to an embodiment of the present disclosure. As shown in FIG. 2, the convolutional neural network model 200 includes a feature extraction network 210, an anchor box detection network 220 and a classification and regression network 230.

Specifically, the feature extraction network 210 is used to extract features (such as edges, textures, etc.) of an input image to generate a corresponding feature map. Such feature extraction network may include at least one convolutional (Conv) layer for calculating feature values, and corresponding activation functions (not shown), as well as at least one Pooling layer for downsampling the feature map to reduce the size of the feature map while retaining important features. Through multiple convolutional layers, activation functions and pooling layers, the features from lower level to higher level in the image are extracted step by step.

The anchor box detection network 220 uses the output of the feature extraction network 210 as the input to locate candidate positions of features of interest through anchor boxes in the input image based on the feature map. As shown, the anchor box detection network may comprise, for example, a Region Proposal Network (RPN) 221 and a Region of Interest (RoI) pooling layer 222. The RPN network 221 is used to generate a plurality of anchor boxes with different scales and aspect ratios by sliding a window on the feature map, and to assign a probability score for target versus background to each of the anchor boxes, so as to detect a target region potentially containing a target in the image. The candidate anchor boxes with different sizes are then converted by the RoI pooling layer 222 into a fixed size for subsequent processing.

Additionally, in one embodiment of the present disclosure, for such an application scenario of quality evaluation of a vehicle's brake disc, a sample image related to the brake disc will be used as an input image. Considering the above characteristics of such images, a Visual Geometry Group (VGG) network with small convolution kernels (such as a 16-layer or 19-layer VGG network), for example, may be used as the feature extraction network of the convolutional neural network model to generate the feature map, and a faster R-CNN may be used to detect the anchor boxes. With an architecture of such network combination, the region of interest of the brake disc can be detected at a faster processing speed, while a higher accuracy can be guaranteed. Additionally, for the case where the grayscale difference in the surface of the brake disc is smaller or vague, a network with a larger number of layers can be used, e.g., a Resnet network (such as a 101-layer or 152-layer ResNet network).

In addition, in one embodiment of the present disclosure, after the feature extraction network 210 and before the anchor box detection network 220, a module (not shown) for performing a feature processing based on an attention mechanism can also be introduced to apply attention weights to the features extracted by the feature extraction network 210. For example, a self-attention mechanism similar to that in a transformer model may be used. In this phase, the system assigns different attention weights by calculating mutual relationships between features, so as to enable more intensive processing of a feature region that is more important to the final task. In this way, the model can be enabled to focus more on the key features in the sample image before generating a region proposal. For example, for the quality evaluation of the FNC brake disc, the key features may be those related to the edge of the infiltrated layer on the FNC surface.

Specifically, the self-attention mechanism of the present disclosure is to capture dependencies between features by calculating a series of weights of input features. For example, this process can be implemented by several steps as follows:

(1) a step of feature mapping: given an input feature set X, it may be firstly mapped to three different spaces through such as three different linear layers (e.g., fully connected layers), resulting in a Query (Q), a Key (K) and a Value (V) respectively, which can be expressed by a formula as follows:

$$Q = XW_Q, \; K = XW_K, \; V = XW_V \text{——Formula (1)}$$

where $W_Q$, $W_K$ and $W_V$ are learnable weight matrices.

(2) a step of attention weight calculation: an attention score is calculated by means of a dot product operation between a Query (Q) and a Key (K), and then normalized by applying a softmax function, resulting in attention weights of each feature to other features, which can be expressed by a formula as follows:

$$A = \text{softmax}\left(\frac{QK^T}{\sqrt{d_k}}\right) \text{——Formula (2)}$$

where A is the attention weight, Q and K may be in the form of matrices, that is, correspond to a Query (Q) matrix and a Key (K) matrix respectively, and T represents Transposition of a matrix, so that a dot product operation is performed on each row (which corresponds to a Query vector) of the Query matrix Q and each column (which corresponds to a Key vector) of the Key matrix K, thereby contributing to measuring the similarity or correlation between different features. Additionally, $d_k$ is the dimension of the Key vector, that is, the number of elements in each Key vector. The values of the above dot product operation are scaled with $\sqrt{d_k}$ as a standardization factor, thereby avoiding the numerical values for the dot product operation performed in high-dimensional space from being too large, which may lead to the softmax function to be in a saturation state, thereby affecting the effect of gradient.

(3) a step of weighted summation: by weighted summation, a final attention output Attention (Q, K, V) is calculated, which is a weighted combination of the Value (V). The attention weight A may be derived by the above steps. The output can be expressed by a formula as follows:

$$\text{Attention } (Q, K, V) = A \cdot V \quad\text{——Formula (3)}$$

(4) a step of multi-head attention: by copying the above process for plenty of times, with each copy having its own independent weight set, the model is enabled to capture information from different representation subspaces concurrently, thereby achieving a multi-head attention.

It follows that by introducing the above attention mechanism, the model is enabled to focus more on those regions that are crucial to the final task while processing each frame of images. This not only improves the accuracy of recognition, but also improves the processing efficiency, since the model no longer wastes resources on image regions of no interest. In addition, such method also increases the interpretability of the model, since the attention weight can be visualized to understand a region with the attention of the model.

Next, the anchor box detection network 220 inputs the detected candidate anchor boxes into the classification and regression network 230. As shown, the classification and regression network 230 further includes a Classification Head 231 and an anchor box regression head 232. The classification head 231 is used to determine whether a candidate anchor box contains a specific target feature, and to output, with respect to each candidate anchor box, a confidence indicating the candidate anchor box contains the target feature, for example, the confidence may be quantified with a score. The anchor box regression head 232 is used to adjust one or more parameters of the convolutional neural network model according to the confidence or the corresponding score to refine the size and position of the candidate anchor box. For example, the anchor box regression head 232 may output four values, usually expressed as tx, ty, tw and th, which correspond to adjusted amounts of x and y coordinates of the center of the anchor box, and adjusted ratios of the width and height of the anchor box, respectively. For example, the adjustment of the parameters of the anchor box regression can be expressed by a formula as follows:

$$(tx,\ ty,\ tw,\ th) = W \cdot F + b \quad\text{——Formula (4)}$$

where W is he weight of the full connect layer, b is the offset item, and F is the feature map. The above steps are iterated until the confidence of the anchor box reaches a predetermined threshold.

In addition, the embodiments of the present disclosure are also improved on the basis of a conventional fully connected layer, that is, double fully connected layers with regularization may be included in the classification and regression network 230. Such architecture of double fully connected layers allows the model to be able to perform a deeper level of feature synthesis and abstraction before performing classification and regression, thereby improving the performance of the model on complex data.

As shown, each of the classification head 231 and the anchor box regression head 232 may apply such architecture of double fully connected layers, in which a first fully connected layer (2311; 2321), a second fully connected layer (2312; 2322), and a regularization layer (2313; 2323) between the first fully connected layer (2311; 2321) and the second fully connected layer (2312; 2322) are included. The first fully connected layer (2311; 2321) is used to perform preliminary feature fusion and conversion on the output of the RoI pooling layer 222, and the second fully connected layer (2312; 2322) further synthesizes such features to provide more enriched and deeper level of feature representation for the final classification and regression task. Therefore, such two-level feature processing mechanism enhances the model's ability to understand complex data.

Additionally, as described above, between the first fully connected layer (2311; 2321) and the second fully connected layer (2312; 2322), a Dropout mechanism based regularization layer (2313; 2323) is additionally added. By randomly "dropping out" a part of the neurons in the neural network (i.e., removing from the network temporarily) during the training, the current neural network model is prevented from excessively depending on specific features in the training data, thereby reducing the risk of over-fitting. Specifically, during the dropout, each neuron has a probability $p$ to remain in active state, whereas the rest are dropped out temporarily. This means that the network only uses a part of the neurons in each forward propagation process. Such randomness enhances the generalization ability of the network and makes it more robust, thereby being able to better process the unseen new data.

Through such architecture of double fully connected layers with regularization, by utilizing the two-level feature processing mechanism together with the regularization processing such as the Dropout, the performance and reliability of the model under complex scenarios are significantly improved, thereby improving the architecture of existing neural network. The advantages of such structure are especially obvious in FNC coating image recognition tasks where special attention is paid to accuracy and robustness. It not only improves the model's ability to capture subtle features, but also enhances the generalization performance for the model and reduces the dependence on specific training samples.

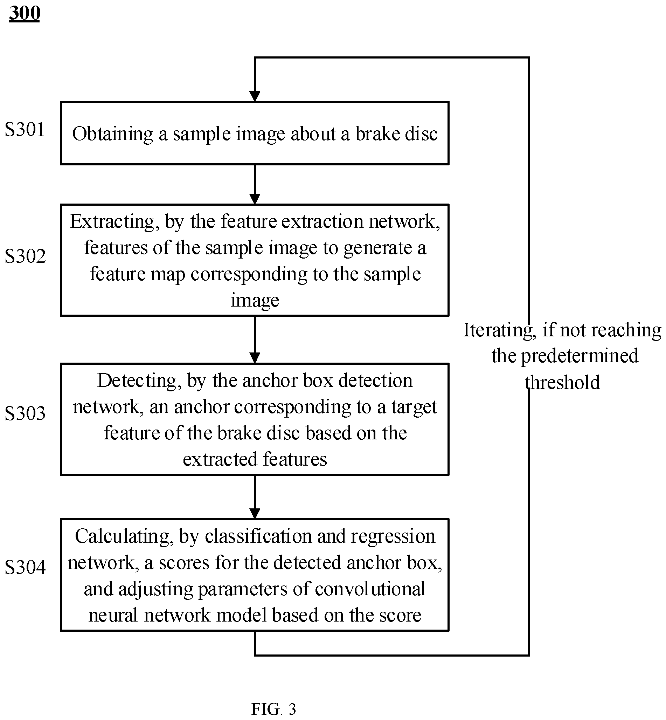

FIG. 3 shows a flowchart of an example method for establishing the convolutional neural network model shown in FIG. 2 according to an embodiment of the present disclosure. In the embodiment described below, the method will be illustrated with an FNC brake disc as an example. Accordingly, the target feature of the FNC brake disc is the thickness of the infiltrated layer of the FNC surface. The application of the method is not limited to such a brake disc, but can be widely applied to the quality evaluation of other types of brake discs. For example, other types of brake discs that are manufactured based on the PIP technology. As shown in FIG. 3, the method 300 may include the steps as follows:
Step S301: Obtaining a sample image related to a brake disc.

In this step, a sample image related to a brake disc is input to the feature extraction network of the convolutional neural network model for training. The sample image may include an original image of at least a part of the brake disc of the vehicle, or may be an image subjected to a specific processing for observation. For example, the sample image may be a microscopic image (such as a metallographic diagram) of the FNC surface of the brake disc as shown in FIG. 1, the specific specifications of which are: a proportional scale of $20 \mu m$, $2560 \times 1920$ pixels, and a Dots Per Inch (DPI) of 96. In addition, in order to enrich the training samples as much as possible, the images used for training may be images of different batches of identical or similar products under different lighting conditions, or images obtained by different devices, so as to further improve the accuracy of defect detection for the neural network model being trained. Additionally, the size of each batch of images may be adjusted randomly while maintaining the aspect ratio constant, so that the generalization ability of the neural network model can be enhanced through multi-scale training.

Step S302: Extracting, by the feature extraction network of the convolutional neural network model, features of the sample image to generate a feature map corresponding to the sample image. As described above, the feature extraction network extracts local features of the image by sliding on the image with a convolutional kernel of the convolutional layer and performing a convolution calculation, and then increases the nonlinearity via the activation function (such as ReLU), and then reduces the spatial size of the features through the pooling layer (i.e., downsampling) while retaining important information.

Step S303: Detecting, by the anchor box detection network of the convolutional neural network model, an anchor box(es) corresponding to a target feature of the brake disc in the sample image based on the extracted features. For example, in the above example, the anchor box detection network may detect regions where the thickness of the infiltrated layer of the FNC surface may be involved in the image, and convert the candidate regions with different sizes into a fixed size via the RoI pooling layer, so as to input them into the classification and regression network for subsequent processing.

Step S304: Calculating, by the classification and regression network of the convolutional neural network model, a score for the detected anchor box(es), and adjusting, by the classification and regression network, parameters of the convolutional neural network model based on the score. As described above, the classification and regression network has an architecture of double fully connected layers with regularization, so that feature synthesis at multiple levels is performed on the features of the sample to enhance the ability to capture the details of the features, and at the same time a regularization processing is performed between the two fully connected layers to avoid over-fitting due to excessive dependence on specific features of the training images after being subjected to classifications for plenty of times.

In addition, as described above, after the above step S302 and before the step S303, a step of applying attention weights to the features extracted by the feature extraction network may be further introduced.

At last, the above steps are iterated until the score for the anchor boxes detected by the convolutional neural network model reaches a predetermined threshold.

In addition, test images may be further used to evaluate whether a trained convolutional neural network model achieves an expected effect. For example, a certain number of sample images are divided into a training image set and a test image set (e.g., according to a ratio of 8:2). After training of the neural network model with the training image set, the test image set is input into the trained neural network model, and the accuracy of the neural network model being currently trained is evaluated based on indicators such as Precision, Recall, or compound accuracy combining both (mean Average Precision, mAP). The Precision corresponds to a ratio of true positive predictions to all positive predictions, and the Recall corresponds to a ratio of samples correctly predicted as positive to all true positive samples. Through the convolutional neural network model established by the method according to the embodiments of the present disclosure, the resulting index of mAP is above 95%.

In addition, in one embodiment of the present disclosure, the above method 300 may further include performing a data processing on the sample images to generate a greater number of sample images. Specifically, the data processing may include at least one of:
Image rotation to rotate a sample image at a certain angle. For example, this processing can be implemented by a rotation matrix. Specifically, a coordinate (x, y) of a pixel point on the two-dimensional plane may be rotated counterclockwise by $\theta$

degrees relative to the origin by being multiplied with a specific matrix (e.g., $\begin{bmatrix} x' \\ y' \end{bmatrix} = \begin{bmatrix} \cos(\theta) & -\sin(\theta) \\ \sin(\theta) & \cos(\theta) \end{bmatrix} \begin{bmatrix} x \\ y \end{bmatrix}$), resulting in a new coordinate (x', y'). By setting different θs, an image may be rotated by an arbitrary angle such as 30, 60, 90 or 120 degrees, respectively, resulting in a rotated image.

Color disturbance enhancement to adjust a corresponding color gamut of a sample image. For example, this processing can identify a specific region in an image by adding a threshold, in which all the pixels larger than a corresponding threshold may be marked as a region corresponding to a specific color gamut. Next, a uniform region is identified by calculating a local variance. If the local variance is lower than the threshold, the region can be identified as uniform. The local variance can be calculated by a formula as follows:

$$Var(x, y) = \frac{1}{N} \sum_{i,j \in neihborhood} (I(i,j) - \mu)^2 \text{——Formula (5)}$$

where I(i, j) represents the color intensity of a specific pixel, μ is the average color intensity of the neighborhood, and N is the number of pixels in the neighborhood. If the calculated variance is lower than the preset threshold, this region can be considered as uniform (i.e., uniform region). Then, the color intensity of the uniform region is adjusted. In the HSI (hue, saturation and brightness) color space, the color intensity is determined mainly by saturation, contrast and brightness. For the adjustment of saturation, an adjustment coefficient may be utilized to increase or decrease the saturation as a whole. For the adjustment of contrast and brightness, a fixed value may be added for each channel (e.g., R, G or B channel) to increase the brightness of each channel, and the contrast may be further adjusted by adjusting a distance of each pixel value of the image relative to the average brightness. For example, for a value L of brightness of a pixel, the adjusted value L' of contrast of which can be derived by a formula as follows:

$$L' = (L - v) \cdot \alpha + v \quad \text{—— Formula (6)}$$

where v is the average brightness of the image and α is the contrast adjustment coefficient. If α>1, the contrast increases; or if 0<α<1, the contrast decreases. In addition, the above processing of color disturbance enhancement may also be implemented by adjusting one or more other color gamut related parameters of the image.

After the above data processing, a large number of training samples for training the neural network model can be generated based on the original sample images, and using such training samples to train the neural network model will greatly enhance the generalization ability of the model. Therefore, through the above data processing, a neural network model with high accuracy and strong generalization performance can be trained with only a few images. In addition, the above data processing can also be used to generate the test images for evaluating the convolutional neural network model as described above.

Besides, for a specific application scenario of quality evaluation of a brake disc (especially an FNC brake disc), the above data processing can perform a targeted improvement on the sample images used under this scenario, ensuring that the input data is of high quality and is suitable for subsequent model training. By the above data processing, the target feature in the image becomes more obvious, and other noise information in the image is filtered out, so that the effect of feature extraction of such images and the effect of using such images for model training can be improved significantly.

In addition, in one embodiment of the present disclosure, the above method 300 may further include performing, after the above data processing, a directional scaling processing on the sample image.

Specifically, under a application scenario of quality evaluation of a brake disc, the requirement for accuracy of feature detection is extremely high, and thus the size of the used sample image (e.g., image of an FNC surface taken by a microscope) is also very large. For example, in the above example, the original size of the image may be 2560×1920 pixels, which is very large for a deep learning based neural network model, and may lead to a waste of computing resources and a reduction of processing speed. Therefore, the goal of directional scaling processing is to scale the image to a smaller size without losing feature information. In one embodiment of the present disclosure, the size may be 640×480 pixels, which is sufficient for the model to identify important features in the image, while greatly reducing the calculation burden.

In addition, it is important to maintain the aspect ratio of the original image during the scaling. This is to avoid image distortion due to stretching or compression. To this end, in the embodiments of the present disclosure, the following method may be used to determine the new width and height:

Firstly, the Aspect Ratio of the original image is calculated, and can be expressed as:

$$Aspect\ Ratio = Original\ Width/Original\ Height = 2560/1920 \text{——Formula (7)}$$

Then, a new height (e.g., 480 pixels) is defined as demanded, and a new width is calculated according to the aspect ratio, which can be expressed as:

$$New\ Width = Aspect\ Ratio \times New\ Height \quad ——Formula\ (8)$$

If the new width exceeds the defined maximum value (e.g., 640 pixels), the height is readjusted to maintain the aspect ratio constant.

Additionally, during the scaling, for example, a Bilinear Interpolation algorithm may be further employed. This algorithm can smoothly process the pixels while scaling the image, avoiding pixelation or image quality loss. Specifically, the value of the new pixel is derived by calculating the weighted average of the pixels surrounding the original pixel, so that a plurality of adjacent pixels belonging to the same neighborhood in the sample image are fused into one pixel, and all pixels in the sample image are fused in this manner to generate a scaled sample image with a smaller size than that of the original sample image. In addition, after the directional scaling processing, a corresponding post processing operation may be further performed on the image, such as sharpening processing to enhance the details of the image and ensure that no information that is important to model training and recognition is lost during the scaling.

Through the above directional scaling processing, the processed image can be scaled in equal proportion as a whole, so that the number of pixels of the directionally scaled image is less than that of the image before the scaling, which reduces the size of the image while avoiding distortion, and since the pixels of the scaled image are fused based on all pixels of the image before the scaling, all pixel information of the image before the scaling is retained. Therefore, the use of the directionally scaled sample image can significantly improve calculation efficiency while guaranteeing accuracy.

A method of establishing a deep learning based convolutional neural network model has been described above. On this basis, the present disclosure further provides a method for evaluating the quality of a vehicle's brake disc, which can detect or identify a target feature of the brake disc using the above convolutional neural network model, and evaluate the quality of the brake disc based on the target feature. Specifically, such quality evaluation method includes:
A sample image of the brake disc is obtained. For example, it may be a sample image described in the above step S301, and a data processing, a directional scaling processing, or a combination of both as described above may be performed on the sample image.

Then, the sample image is input into a convolutional neural network model established by the method as described above in conjunction with FIG. 3, to automatically detect a target feature of the brake disc of the vehicle, including locating a position or region of the target feature, and displaying a measurement result related to the target feature. For example, a large number of sample images may be input into the trained convolutional neural network model in batches to automatically detect the target feature of the brake disc, and the measurement result related to the target feature (e.g., a value of thickness of infiltrated layer of FNC brake disc) may be calculated and displayed. In an embodiment, the quality evaluation method according to the present disclosure can be achieved by evaluating one or more metrics of a brake disc using a convolutional neural network model. For example, the metrics may include at least one of the compliance of the metallographic structure of the brake disc, the compliance of the coating thickness of the brake disc's surface, and the compliance of the infiltration thickness of the brake disc manufactured based on PIP technology, so as to evaluate the quality of a respective type of brake disc. Compared with manual based marking, the processing time for the quality evaluation method according to the present disclosure is greatly reduced (a few seconds or even less is taken to accomplish the marking of one piece of sample image), and the speed is significantly improved.

Then, the quality of the brake disc is evaluated based on the target feature. Continuing with the example described above, the detected target feature is thickness of the infiltrated layer of the FNC surface. The quality of the brake disc may be evaluated by comparing a marked thickness of the infiltrated layer with a predefined threshold length. As shown in the right picture of FIG. 4, block 402 shows the minimum thickness of the infiltrated layer of the FNC brake disc that is automatically marked using the neural network model of the present disclosure, as well as the specific numerical values. It can be seen in the right picture that the minimum thickness of the infiltrated layer (which corresponds to the position indicated by block 401) that was not originally identified by the operator can also be identified, and the minimum thickness of the infiltrated layer is actually less than the predefined threshold, so the quality of the brake disc should be evaluated as unqualified, thus achieving a more accurate quality evaluation result. Various steps involved in the above method can be implemented by a computer (e.g., by a processor of the computer), thereby improving the computer-implemented method for evaluating the quality of a vehicle's brake disc.

In another embodiment, for a brake disc containing different components (such as iron, nickel, carbon and other elements), the established convolutional neural network model can be used to evaluate the metallographic structure compliance of the brake disc, so as to evaluate the quality of such brake disc. In this embodiment, the sample image is an image related to at least a part of a surface of the brake disc, and the target feature of the brake disc is an area with a specified range of grayscale within the surface, and the area with the specified range of grayscale may correspond to a respective component of the brake disc. Specifically, for example, regarding the brake disc containing iron and carbon components, the convolutional neural network model can be used to identify one or more regions having grayscale values are lower than a specific threshold, corresponding to the iron component, and one or more regions having grayscale values are higher than a specific threshold, corresponding to the carbon component. On this basis, based on the area of the regions corresponding to these two components, for example, by comparing the areas corresponding to different components or based on the proportion of the areas of different components, the metallographic structural compliance of such brake discs can be evaluated, and the higher the metallographic structural compliance of the brake disc, the better the quality of the brake disc.

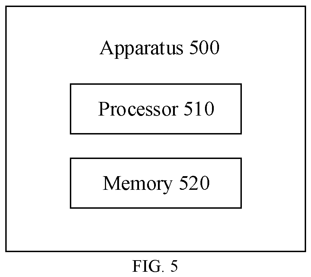

Next, an example of an apparatus for evaluating the quality of a vehicle's brake disc according to an embodiment of the present disclosure will be described with reference to FIG. 5.

As shown in FIG. 5, an apparatus 500 for evaluating the quality of a vehicle's brake disc includes a processor 510 and a memory 520. This apparatus 500 may be a computer or a remote server integrated in the vehicle. It should be understood that the illustrated structure is only exemplary and not restrictive, and the apparatus 500 may include other components besides such units. However, since such components are irrelevant to the contents of the embodiments of the present disclosure, the illustrations and descriptions thereof are omitted herein.

In addition, since the operations performed by the apparatus 500 for evaluating the quality of a vehicle's brake disc according to the embodiment of the present disclosure are substantially similar to the details described above with reference to Figs. 1 to 4, a part of the description of the same details is omitted herein for the sake of brevity.

The processor 510 may be a central processing unit (CPU), a micro-control unit (MCU), a data signal processor (DSP), or other forms of processing units with data processing capability and/or instruction execution capability, and may utilize computer instructions stored in the memory 520 to perform desired functions, in which when executed by the processor 510, the computer instructions perform the method for evaluating the quality of a vehicle's brake disc as described above, including: obtaining a sample image related to the brake disc; inputting the sample image into a convolutional neural network model established by the method according to the embodiments of the present disclosure to automatically detect a target feature of the brake disc; and evaluating the quality of the brake disc based on the target feature.

Additionally, when executed by the processor 510, the computer program instructions further: perform a first data processing on a first number of the sample images to generate a second number of sample images, the first number being greater than the second number, and perform, after the first data processing, a second data processing on the sample image, in which the first data processing includes: image rotation to rotate the sample image; color disturbance enhancement to adjust corresponding color gamut of the sample image; or a combination thereof; and the second data processing includes: fusing a plurality of pixels belonging to the same neighborhood in the sample image into one pixel, and performing the fusing on all pixels in the sample image to generate a scaled sample image with a smaller size than that of the original sample image, as described above.

Additionally, when executed by the processor 510, the computer program instructions further: apply an attention weight to the features extracted by the feature extraction network based on a feature processing of an attention mechanism, as described above.

In addition, the present disclosure further provides a computer-readable storage medium storing computer instructions, and a computer program product including computer instructions, in which when executed by a processor, the computer program instructions implement the steps performed by the processor as described above, which are consistent with corresponding contents of various embodiments described above in conjunction with Figs. 1 to 4. It should be understood that various components or modules in the above apparatus can each be implemented either by hardware or by software, and can also be implemented by a combination of hardware and software.

A full description has been made above to the method and apparatus for evaluating the quality of a vehicle's brake disc according to the embodiments of the present disclosure in conjunction with various accompanying drawings. By means of various aspects and embodiments of the present disclosure, not only can quality of brake disc be evaluated efficiently and accurately, but also the evaluation processing for quality of brake disc can be simplified through data processing and model optimization technologies with respect to such application scenario, which reduces processing time under a condition of limited number of samples, while guaranteeing accuracy of results, and has significant application value.

In addition, the basic principles of the present disclosure have been described above in conjunction with specific embodiments, but it should be noted that the advantages, benefits, effects, etc. mentioned in the embodiments of the present disclosure are only examples rather than limitations, and such advantages, benefits, effects, etc. cannot be considered as essential for various embodiments of the present disclosure. Additionally, the specific details disclosed above are only for purpose of illustration and for easy of understanding, but not for limitation, and the above details do not limit the present disclosure to have to be implemented with the above specific details.

The block diagrams of the devices, equipment, apparatuses and systems involved in the embodiments of the present disclosure are only illustrative examples, and are not intended to require or imply that they must be connected, arranged or configured in the manner shown in the block diagrams. As will be recognized by those skilled in the art, such devices, equipment, apparatuses and systems can be connected, arranged or configured in arbitrary manner. The words such as "including", "containing" and "having" are open terms, which mean "including but not limited to" and can be used interchangeably therewith. The terms of "or" and "and" as used herein refer to the terms of "and/or" and can be used interchangeably therewith, unless otherwise explicitly indicated in the context. The term of "such as" as used herein refers to the phrase of "such as but not limited to" and can be used interchangeably therewith.

Additionally, as used herein, "or" used in an enumeration of items starting with "at least one of" indicates a separate enumeration, so that, for example, an enumeration of "at least one of A, B or C" means A or B or C, or AB or AC or BC, or ABC (i.e., A and B and C). In addition, the wording of "exemplary" does not mean that the described example is preferred or better than other examples.

It should also be noted that in the devices and methods of the present disclosure, various components or steps can be decomposed and/or recombined. Such decomposition and/or recombination should be regarded as equivalent solutions of the present disclosure.

For ordinary operators in the art, it can be understood that all or any part of the methods and devices of the present disclosure can be implemented in hardware, firmware, software or a combination thereof in any computing device (including a processor, a storage medium, etc.) or network of computing devices. The hardware may be a general-purpose processor, a digital signal processor (DSP), an ASIC, a field programmable gate array (FPGA) or other programmable logic device (PLD), discrete gate or transistor logic, discrete hardware assemblies, or any combination thereof designed to perform the functions described herein. A general-purpose processor may be a microprocessor, but in alternative, the processor may be any commercially available processor, controller, microcontroller or state machine. A processor may also be implemented as a combination of computing devices, e.g., a combination of a DSP and a microprocessor, a plurality of microprocessors, one or more microprocessors cooperating with a DSP core, or any other such configuration. The software may exist in any form of computer-readable tangible storage media. By way of example and not limitation, such computer-readable tangible storage media may include RAM, ROM, EEPROM, CD-ROM or other optical disc storage, magnetic disc storage or other magnetic storage device, or any other tangible media that can be used to carry or store desired program codes in the form of instructions or data structures and that can be accessed by a computer. As used herein, a disc includes a compact disc (CD), a laser disc, an optical disc, a digital versatile disc (DVD), a floppy disc and a Blu-ray disc.

In addition, the claimed protection scope of the present disclosure is not limited to the specific aspects of the processing, machines, manufacturing, composition of events, means, methods and actions as described above. The processing, machines, manufacturing, composition of events, means, methods and actions that currently exist or are to be developed later can be utilized to perform basically the same functions or achieve basically the same results as the corresponding aspects described herein.

The above description of the disclosed aspects is provided to enable any operator in the art to make or use the present disclosure. Various modifications to such aspects will be very obvious to those skilled in the art, and the general principles defined herein can be applied to other aspects without departing from the scope of the present disclosure. Therefore, the present disclosure is not intended to be limited to the aspects illustrated herein, but conforms to the widest scope consistent with the principles and novel features disclosed herein.

The above description has been presented for purposes of illustration and description. In addition, such description is not intended to limit the embodiments of the present disclosure to the forms disclosed herein. Although a plurality of example aspects and embodiments have been discussed above, those skilled in the art will recognize certain variations, modifications, changes, additions and sub-combinations thereof.

**Claims**

1. A computer-implemented method for establishing a deep learning based convolutional neural network model (200),

   wherein the convolutional neural network model is used to evaluate a quality of a vehicle's brake disc, and includes a feature extraction network (210), an anchor box detection network (220) and a classification and regression network (230); and
   wherein the classification and regression network (230) further includes a first fully connected layer (2311, 2321), a second fully connected layer (2312, 2322), and a regularization layer (2313, 2323) between the first fully connected layer and the second fully connected layer;
   the method comprising:

   obtaining a sample image related to the brake disc (S301);
   extracting, by the feature extraction network, features of the sample image (S302);
   detecting, by the anchor box detection network, an anchor box corresponding to a target feature of the brake disc in the sample image based on the extracted features (S303);
calculating, by the classification and regression network, a score for the detected anchor box, and adjusting one or more parameters of the convolutional neural network model based on the score (S304); and
iterating the above steps until the score reaches a predetermined threshold.

2. The method according to claim 1, further comprising:
performing a first data processing on a first number of the sample images to generate a second number of sample images, the second number being greater than the first number, wherein the first data processing comprises:

image rotation to rotate the sample image;
color disturbance enhancement to adjust corresponding color gamut of the sample image; or
a combination thereof.

3. The method according to claim 1 or 2, further comprising:
performing, after the first data processing, a second data processing on the sample image, wherein the second data processing comprises:
fusing a plurality of pixels belonging to same neighborhood in the sample image into one pixel, and performing the fusing on all pixels in the sample image to generate a scaled sample image with a smaller size than that of the original sample image.

4. The method according to any of claims 1-3, wherein the convolutional neural network model further includes an attention weight module that follows the feature extraction network and precedes the anchor box detection network, and the attention weight module applies an attention weight to the features extracted by the feature extraction network based on an attention mechanism.

5. The method according to any of claims 1-4, wherein a VGG network or a Resnet network is used as the feature extraction network, and the anchor box detection network uses a faster R-CNN to detect the anchor boxes.

6. The method according to any of claims 1-5, wherein the convolutional neural network model is used to evaluate the quality of a brake disc manufactured based on the Programmable Ion Permeation (PIP) technology, the sample image is an image related to at least a part of a surface of the brake disc, the target feature of the brake disc is thickness of the infiltrated layer of the surface, and the convolutional neural network model evaluates the quality of the brake disc based on the target feature.

7. The method according to any of claims 1-5, wherein the convolutional neural network model is used to evaluate the quality of a brake disc containing different components, the sample image is an image related to at least a part of a surface of the brake disc, the target feature of the brake disc is an area with a specified range of grayscale within the surface, the area with the specified range of grayscale corresponds to a respective component of the brake disc, and the convolutional neural network model evaluates the quality of the brake disc based on the target feature.

8. An apparatus (500) for evaluating the quality of a vehicle's brake disc, comprising:

a processor (510); and
a memory (520) having stored therein computer instructions which, when executed by the processor, cause the processor to perform a method for evaluating the quality of a vehicle's brake disc, the method comprising:

obtaining a sample image related to the brake disc;
inputting the sample image into a deep learning based convolutional neural network model to automatically detect a target feature of the brake disc;
evaluating the quality of the brake disc based on the target feature;
wherein the convolutional neural network includes a feature extraction network (210), an anchor box detection network (220) and a classification and regression network (230), and the classification and regression network (230) further includes a first fully connected layer (2311, 2321), a second fully connected layer (2312, 2322), and a regularization layer (2313, 2323) between the first fully connected layer and the second fully connected layer.

9. The apparatus according to claim 8, wherein the processor of the apparatus further performs a method for establishing a deep learning based convolutional neural network model, the method comprising:

obtaining a sample image related to the brake disc (S301);

extracting, by the feature extraction network, features of the sample image (S302);

detecting, by the anchor box detection network, an anchor box corresponding to a target feature of the brake disc in the sample image based on the extracted features (S303);

calculating, by the classification and regression network, a score for the detected anchor box, and adjusting one or more parameters of the convolutional neural network model based on the score (S304); and

iterating the above steps until the score reaches a predetermined threshold.

10. The apparatus according to claim 8 or 9, wherein the processor of the apparatus further performs a method for establishing a deep learning based convolutional neural network model, the method further comprising:

performing a first data processing on a first number of the sample images to generate a second number of sample images, the second number being greater than the first number, wherein the first data processing comprises:

image rotation to rotate the sample image;

color disturbance enhancement to adjust corresponding color gamut of the sample image; or

a combination thereof; and

performing, after the first data processing, a second data processing on the sample image, wherein the second data processing comprises:

fusing a plurality of pixels belonging to same neighborhood in the sample image into one pixel, and performing the fusing on all pixels in the sample image to generate a scaled sample image with a smaller size than that of the original sample image.

11. The apparatus according to any of claims 8-10, wherein the convolutional neural network model further includes an attention weight module that follows the feature extraction network and precedes the anchor box detection network, and the processor of the apparatus applies, through the attention weight module, an attention weight to the features extracted by the feature extraction network based on an attention mechanism.

12. The apparatus according to any of claims 8-11, wherein a VGG network or a Resnet network is used as the feature extraction network, and the anchor box detection network uses a faster R-CNN to detect the anchor box.

13. The apparatus according to any of claims 8-12, wherein the convolutional neural network model is used to evaluate the quality of a brake disc manufactured based on the Programmable Ion Permeation (PIP) technology, the sample image is an image related to at least a part of a surface of the brake disc, and the target feature of the brake disc is thickness of the infiltrated layer of the surface

14. The apparatus according to any of claims 8-12, wherein the convolutional neural network model is used to evaluate the quality of a brake disc containing different components, the sample image is an image related to at least a part of a surface of the brake disc, and the target feature of the brake disc is an area with a specified range of grayscale within the surface, and the area with the specified range of grayscale corresponds to a respective component of the brake disc.

15. A computer-readable storage medium having stored thereon computer instructions which, when executed by a processor, cause the processor to perform the method for evaluating the quality of a vehicle's brake disc according to any of claims 1-7.

FIG. 1

**Convolutional Neural Network Model 200**

FIG. 2

**300**

S301 | Obtaining a sample image about a brake disc

S302 | Extracting, by the feature extraction network, features of the sample image to generate a feature map corresponding to the sample image

Iterating, if not reaching the predetermined threshold

S303 | Detecting, by the anchor box detection network, an anchor corresponding to a target feature of the brake disc based on the extracted features

S304 | Calculating, by classification and regression network, a scores for the detected anchor box, and adjusting parameters of convolutional neural network model based on the score

FIG. 3

FIG. 4

Apparatus 500

Processor 510

Memory 520

FIG. 5

Europäisches
Patentamt

European
Patent Office

Office européen
des brevets

# EUROPEAN SEARCH REPORT

**Application Number**

EP 25 15 2274

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CONG ZIJIAN ET AL: "Research on Brake Pad Surface Defect Detection Method based on Deep Learning", 2023 INTERNATIONAL CONFERENCE ON ADVANCES IN ELECTRICAL ENGINEERING AND COMPUTER APPLICATIONS (AEECA), IEEE, 18 August 2023 (2023-08-18), pages 813-818, XP034601114, DOI: 10.1109/AEECA59734.2023.00149 [retrieved on 2024-05-09] | 1-3, 8-10,15 | INV. G06F18/2132 G06T7/00 G06V10/44 G06V10/774 G06V10/82 G06V20/69 |
| Y | * sections III.A, VI.A, VI.C, figures 6-8, Table I * | 4,5,7, 11,12,14 | |
| A | Adrian Rosebrock: "Convolutional Neural Networks (CNNs) and Layer Types - PyImageSearch", , 28 September 2023 (2023-09-28), pages 1-35, XP093279508, Retrieved from the Internet: URL:https://web.archive.org/web/2023092804 3839/https://pyimagesearch.com/2021/05/14/ convolutional-neural-networks-cnns-and-lay er-types/ [retrieved on 2025-05-21] * page 22, 2nd paragraph * | 1,8,15 | |

-----

-----

-/--

| | | |
|---|---|---|
| | TECHNICAL FIELDS SEARCHED (IPC) | |
| | G06F G06T G06V | |

The present search report has been drawn up for all claims

| Place of search | Date of completion of the search | Examiner |
|---|---|---|
| The Hague | 21 May 2025 | Loza, Artur |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt
European Patent Office
Office européen des brevets

# EUROPEAN SEARCH REPORT

**Application Number**

EP 25 15 2274

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | XU MINGLE ET AL: "A Comprehensive Survey of Image Augmentation Techniques for Deep Learning", PATTERN RECOGNITION., 2 May 2023 (2023-05-02), page 109347, XP093279158, GB ISSN: 0031-3203, DOI: 10.1016/j.patcog.2023.109347 Retrieved from the Internet: URL:https://www.sciencedirect.com/science/article/pii/S0031320323000481 [retrieved on 2025-05-21] * Table 1 * | 2,3,10 | |
| Y | WU JUN ET AL: "A Lightweight YOLOv5 Optimization of Coordinate Attention", APPLIED SCIENCES, 30 January 2023 (2023-01-30), page 1746, XP093279661, ISSN: 2076-3417, DOI: 10.3390/app13031746 Retrieved from the Internet: URL:https://www.mdpi.com/2076-3417/13/3/1746/pdf [retrieved on 2025-05-21] * section 3.3 and figure 2 * | 4,11 | |
| Y | CN 115 953 642 A (HARBIN KEJIA GENERAL MECHANICAL & ELECTRICAL CO LTD) 11 April 2023 (2023-04-11) * page 2 * | 5,12 | |

**TECHNICAL FIELDS SEARCHED (IPC)**

-/--

The present search report has been drawn up for all claims

| Place of search | Date of completion of the search | Examiner |
|---|---|---|
| The Hague | 21 May 2025 | Loza, Artur |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 25 15 2274

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WEI L ET AL: "A study of brake contact pairs under different friction conditions with respect to characteristics of brake pad surfaces", TRIBOLOGY INTERNATIONAL, ELSEVIER LTD, AMSTERDAM, NL, vol. 138, 17 May 2019 (2019-05-17), pages 99-110, XP085788577, ISSN: 0301-679X, DOI: 10.1016/J.TRIBOINT.2019.05.016 [retrieved on 2019-05-17] * the whole document * | 6,13 | |
| A | CN 218 560 305 U (CHONGQING SANYOU HAITONG SURFACE TECH CO LTD) 3 March 2023 (2023-03-03) * the whole document * | 6,13 | |
| A | CN 114 972 892 A (SHANDONG JIATONG SPECIAL PURPOSE VEHICLE MFG CO LTD) 30 August 2022 (2022-08-30) * the whole document * | 6,13 | **TECHNICAL FIELDS SEARCHED (IPC)** |
| Y | BIN ZHENG ET AL: "Research on Surface Defect Detection System for Brake Disc based on Machine vision", 2023 IEEE 7TH INFORMATION TECHNOLOGY AND MECHATRONICS ENGINEERING CONFERENCE (ITOEC), IEEE, vol. 7, 15 September 2023 (2023-09-15), pages 2224-2228, XP034456973, DOI: 10.1109/ITOEC57671.2023.10291503 [retrieved on 2023-10-30] * section II, last two paragraphs * | 7,14 | |
| Y | CN 114 119 562 A (QINGDAO TECHNOLOGY UNIV) 1 March 2022 (2022-03-01) * claim 1 * | 7,14 | |

The present search report has been drawn up for all claims

| Place of search | Date of completion of the search | Examiner |
|---|---|---|
| The Hague | 21 May 2025 | Loza, Artur |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 15 2274

This annex lists the patent family members relating to the patent documents cited in the above-mentioned European search report.
The members are as contained in the European Patent Office EDP file on
The European Patent Office is in no way liable for these particulars which are merely given for the purpose of information.

21-05-2025

| Patent document cited in search report | | Publication date | Patent family member(s) | Publication date |
|---|---|---|---|---|
| CN 115953642 | A | 11-04-2023 | NONE | |
| CN 218560305 | U | 03-03-2023 | NONE | |
| CN 114972892 | A | 30-08-2022 | NONE | |
| CN 114119562 | A | 01-03-2022 | NONE | |

**EP 4 589 454 A1**

**Patent documents cited in the description**

- CN 202410072031